Europäisches Patentamt

European Patent Office

Office européen des brevets

(19)

(11) **EP 1 203 877 B1**

(12) **FASCICULE DE BREVET EUROPEEN**

(45) Date de publication et mention
de la délivrance du brevet:
**17.08.2005 Bulletin 2005/33**

(51) Int Cl.⁷: **F02D 41/02**, F02D 41/40,
F01N 3/023

(21) Numéro de dépôt: **01402653.8**

(22) Date de dépôt: **12.10.2001**

(54) **Système d'aide à la régénération d'un filtre à particules intégré dans une ligne d'échappement d'un moteur Diesel de véhicule**

Vorrichtung zur Regenerierung eines Partikelfilters in einer selbstgezündeten Brennkraftmaschine

System for assisting the regeneration of a particle filter comprised in the exhaust pipe of a diesel vehicle engine

(84) Etats contractants désignés:
**AT BE CH CY DE DK ES FI FR GB GR IE IT LI LU MC NL PT SE TR**

(30) Priorité: **03.11.2000 FR 0014137**

(43) Date de publication de la demande:
**08.05.2002 Bulletin 2002/19**

(73) Titulaire: **Peugeot Citroen Automobiles SA**
**92200 Neuilly sur Seine (FR)**

(72) Inventeurs:
• **Klein, Hervé**
**92300 Levallois Perret (FR)**
• **Salvat, Olivier**
**75010 Paris (FR)**

(74) Mandataire:
**Habasque, Etienne Joel Jean-François et al**
**Cabinet Lavoix**
**2, Place d'Estienne d'Orves**
**75441 Paris Cédex 09 (FR)**

(56) Documents cités:
**EP-A- 0 859 132        WO-A-00/60228**
**DE-A- 19 827 636       US-A- 4 455 393**
**US-A- 5 050 376**

• **WINTERHAGEN J: "Der neue Peugeot 607" ATZ AUTOMOBILTECHNISCHE ZEITSCHRIFT,FRANCKH'SCHE VERLAGSHANDLUNG. STUTTGART,DE, vol. 2000, no. 5, mai 2000 (2000-05), pages 300-308, XP002172871 ISSN: 0001-2785**

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

Cependant, la gestion du fonctionnement de celui-ci et en particulier la gestion de sa régénération génère encore des difficultés, comme cela apparaît par exemple du document EP-A-0 859 132 qui décrit un système conforme au préambule de la revendication 1.

Le but de l'invention est donc de résoudre ces problèmes.

A cet effet, l'invention a pour objet un système d'aide à la régénération d'un filtre à particules intégré dans une ligne d'échappement d'un moteur Diesel de véhicule, comportant :

- des moyens d'acquisition d'informations relatives aux conditions d'utilisation du véhicule, et
- des moyens d'analyse de ces informations pour identifier un type de roulage actuel du véhicule, associés à des moyens de stockage d'un historique des conditions d'utilisation du véhicule, caractérisé en ce que les moyens d'analyse sont également associés à des moyens de calcul d'informations statistiques relatives à la probabilité que le véhicule adopte un type de roulage plus favorable au déclenchement d'une régénération du filtre que le type de roulage actuel, afin de retarder en conséquence ce déclenchement.

L'invention sera mieux comprise à la lecture de la description qui va suivre, donnée uniquement à titre d'exemple et faite en se référant aux dessins annexés, sur lesquels :

- la Fig.1 représente un schéma synoptique illustrant un moteur Diesel de véhicule automobile, et les différents organes associés à celui-ci,
- la Fig.2 illustre la détection d'un type de roulage, et
- la Fig.3 illustre un calcul de probabilité.

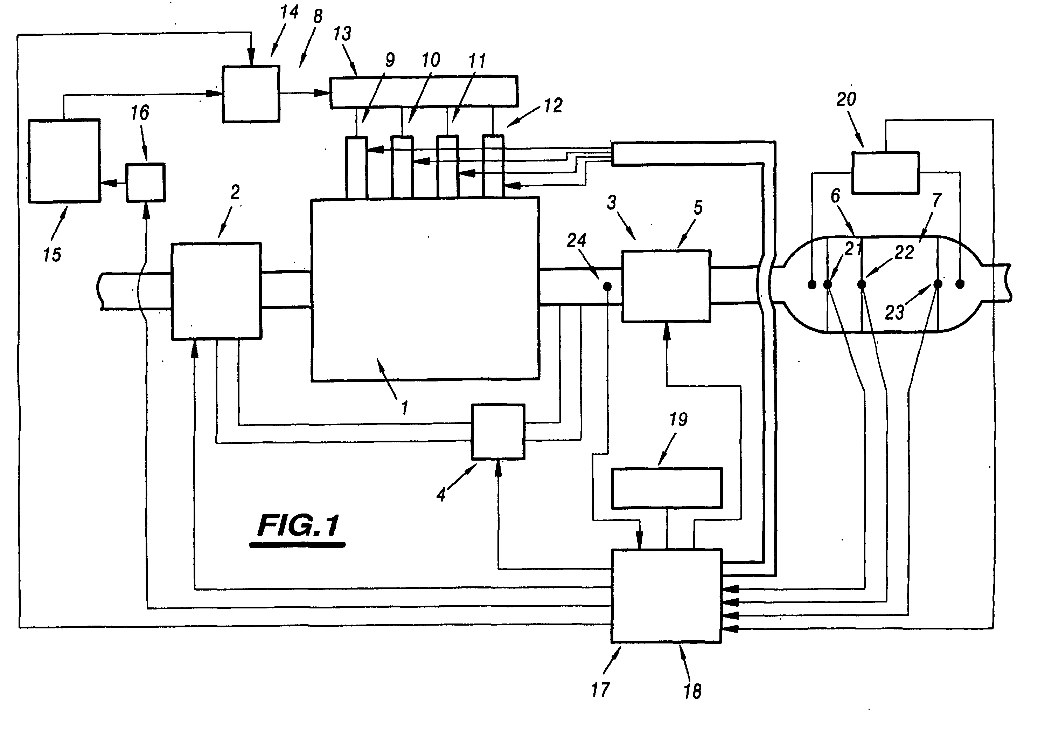

On a en effet représenté sur la figure 1, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, disposé dans la ligne d'échappement.

Le moteur est également associé à un système d'alimentation par exemple commune en carburant des cylindres de celui-ci. Ce système est désigné par la référence générale 8 sur cette figure et comporte par exemple des injecteurs à haute pression à commande électrique associés à ces cylindres.

Bien entendu, d'autres systèmes d'alimentation à haute pression comme par exemple par injecteurs-pompes peuvent être envisagés.

Dans l'exemple de réalisation représenté, le moteur est un moteur à quatre cylindres et comporte donc quatre injecteurs à commande électrique, respectivement 9,10,11 et 12.

Ces différents injecteurs sont associés par exemple à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et par exemple à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15 pour permettre l'injection d'une certaine quantité de cet additif dans le carburant.

D'autres moyens pour abaisser cette température peuvent également être utilisés comme par exemple un filtre à particules catalysé.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour contrôler le fonctionnement du moteur et notamment le couple engendré par celui-ci en fonction des conditions de roulage du véhicule de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le capteur de pression 20 peut également être relié aux bornes du filtre seul.

Le calculateur peut également recevoir une information de teneur en oxygène des gaz d'échappement à partir d'une sonde Lambda λ désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Les moyens de contrôle 17 sont également associés à des moyens de détermination de l'état d'activation du catalyseur d'oxydation 6 formés par le calculateur 18 de ceux-ci, pour, lors de la régénération du filtre, adapter de façon continue les conditions de déroulement de la phase d'injections multiples de carburant dans les cylindres du moteur afin de tenir compte de l'état d'activation du catalyseur.

Ceci est réalisé en commandant le phasage et/ou la quantité de carburant injecté lors des injections multiples pour adapter de façon continue la quantité d'hydrocarbures produite lors de cette phase par le moteur, au niveau d'activité du catalyseur et optimiser le fonctionnement de celui-ci, par pilotage du système d'alimentation en carburant 8.

Une surveillance en continu du niveau d'activité du catalyseur permet donc de commander en continu le phasage et/ou la quantité de carburant injecté pour optimiser en continu le fonctionnement du catalyseur et donc la température au sein de ce catalyseur en évitant toute dégradation de celui-ci, du filtre à particules ou encore du moteur et toute production de fumées ou d'odeurs.

L'état d'activation du catalyseur 6 peut être déterminé par le calculateur 18 par exemple à partir des informations délivrées par les capteurs de température 21 en entrée du catalyseur et 22 en sortie de celui-ci, de façon classique.

De préférence, le calculateur 18 est associé à une modélisation numérique intégrée du catalyseur pour connaître son état d'activité à partir des informations fournies par les capteurs.

Bien entendu, d'autres moyens peuvent être utilisés comme par exemple des moyens d'analyse de la composition chimique des gaz d'échappement en entrée et en sortie de ce catalyseur.

Comme cela a été indiqué précédemment, le calculateur 18 est associé à des capteurs permettant de relever des informations relatives aux conditions d'utilisation du véhicule comme par exemple sa vitesse, la position de la pédale d'accélérateur, le régime de rotation du moteur, etc...

Ce calculateur 18 est alors adapté pour analyser ces informations afin d'identifier un type de roulage du véhicule et déterminer si celui-ci est ou non favorable au déroulement de la régénération.

On sait en effet que l'augmentation de la température des gaz d'échappement et la température atteinte naturellement par ceux-ci sont plus importantes si le moteur du véhicule est utilisé sur un point de fonctionnement chargé.

Le calculateur est alors adapté pour détecter un tel type de roulage favorable, comme par exemple sur autoroute.

Ce calculateur est en effet adapté pour identifier un type de roulage actuel du véhicule parmi des types de roulage en ville, sur route, en montage ou sur autoroute, en calculant un critère de roulage instantané du véhicule selon la relation :

$$Cr \text{ inst} = V(1 + k \text{ } Pp)$$

Avec

Cr inst :   Critère de roulage instantané
V :         Vitesse du véhicule
Pp :        Position de la pédale d'accélérateur
K :         Facteur de correction.

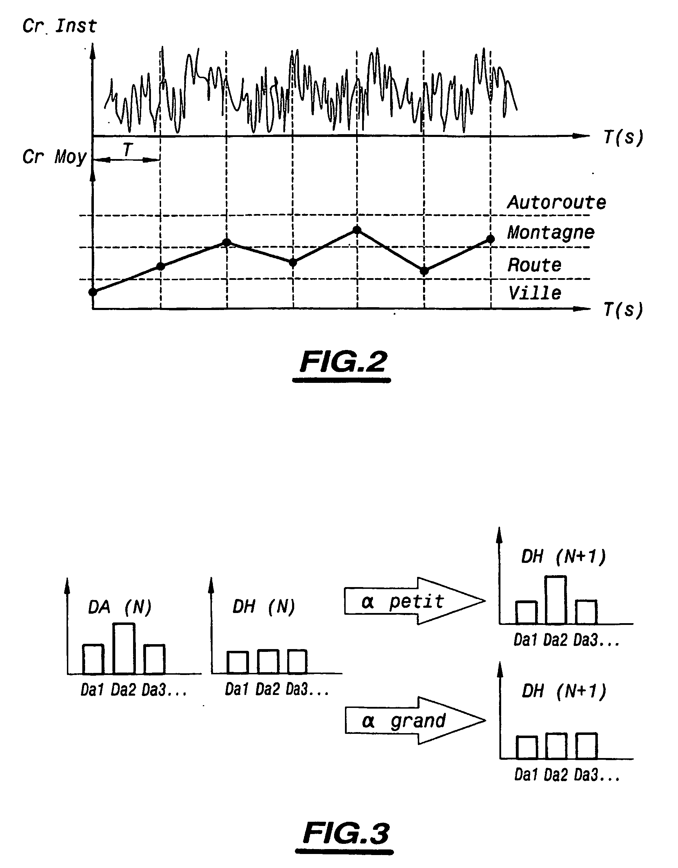

Ce critère de roulage instantané est alors lissé et comparé par le calculateur à des seuils prédéterminés correspondant aux différents types de roulage afin de déterminer le type de roulage actuel, comme cela est illustré sur la figure 2.

En fonction du type de roulage actuel détecté, la régénération du filtre à particules est déclenchée ou non par le calculateur selon que celui-ci est favorable ou non à cette régénération.

Ainsi, si le véhicule roule sur autoroute, on sait que les conditions seront optimales pour la régénération du filtre dans la mesure où le moteur est chargé.

Ceci permet d'améliorer le taux de réussite de la régénération et de diminuer la surconsommation induite par exemple par la post-injection.

Le critère de roulage instantané peut par exemple être obtenu par filtrage ou calcul d'une moyenne glissante sur une période de temps T.

Bien entendu, d'autres variantes de réalisation peuvent être envisagées, par exemple en modifiant les paramètres pris en compte pour le calcul du critère instantané.

A partir du critère de roulage instantané, le calculateur 18 est adapté pour construire un historique des conditions d'utilisation du véhicule et pour déclencher le stockage de celui-ci dans les moyens 19.

Cet historique permet de calculer la probabilité de rencontrer des conditions d'utilisation du véhicule plus favorable que les conditions d'utilisation actuelles.

Ces informations statistiques sur les conditions d'utilisation du véhicule donnent une indication sur l'opportunité de différer ou non le déclenchement de la régénération. Une indication statistique favorable autorise un report de ce déclenchement dans le cas où les conditions à court terme ne sont pas favorables.

Une indication statistique défavorable interdit par contre un report de ce déclenchement dans le cas où les conditions à court terme sont favorables.

La construction de l'historique est donc réalisée par le calculateur qui est adapté pour calculer une distribution actuelle de types de roulage DA suivant la relation :

$$DA = \begin{bmatrix} da_1 \\ da_2 \\ da_3 \\ .... \\ daN \end{bmatrix}$$

avec $da_x$ qui représente le nombre d'occurrences pour un type de roulage donné, et $\overline{N}$ le nombre de types de roulage différents possibles, puis pour calculer la probabilité d'avoir un type de roulage donné sur un nombre d'évènements donné afin de mettre à jour une distribution historique DH selon la relation :

$$DH(n+1) = \alpha\, DH(n) + (1-\alpha)DAnorm$$

Avec

$\alpha$ :     Facteur d'oubli, $\alpha \in [0,1]$

DH :     Distribution historique

DAnorm :     Distribution actuelle normalisée (probabilité)

et enfin pour calculer une probabilité P que le véhicule adopte un type de roulage plus favorable que le type actuel, selon la relation

$$P = \sum_{RoulActu+1}^{N} DH_i$$

avec DH qui représente la distribution historique et RoulActu, le type de roulage actuel parmi les N types de roulage possibles.

Les informations de types de roulage construites par exemple à partir d'informations relatives à la charge et au régime de rotation du moteur, représentent des utilisations du véhicule telles que des utilisations en ville, sur route ou autoroute, etc...

A chaque type d'utilisations correspond un taux de réussite et/ou un coût de régénération.

DH représente donc la probabilité d'apparition du type de roulage spécifique i sur une période fonction de $\alpha$ et de la période de rafraîchissement de la distribution actuelle (DAnorm). Comme cela est illustré sur la figure 3, un facteur d'oubli faible fait évoluer rapidement la distribution historique en fonction de la distribution actuelle, c'est à dire que l'historique est faible. Inversement, un facteur d'oubli important favorise l'historique (DH évolue lentement).

On conçoit alors que grâce à une telle structure, on optimise le déclenchement de la régénération.

**Revendications**

1. Système d'aide à la régénération d'un filtre à particules intégré dans une ligne d'échappement d'un moteur Diesel de véhicule automobile, comportant :

- des moyens (18) d'acquisition d'informations relatives aux conditions d'utilisation du véhicule, et

- des moyens (18) d'analyse de ces informations pour identifier un type de roulage actuel du véhicule, associés à des moyens (19) de stockage d'un historique des conditions d'utilisation du véhicule, **caractérisé en ce que** les moyens d'analyse (18) sont également associés à des moyens (18) de calcul d'informations statistiques relatives à la probabilité que le véhicule adopte un type de roulage plus favorable au déclenchement d'une régénération du filtre que le type de roulage actuel, afin de retarder en conséquence ce déclenchement.

**2.** Système selon la revendication 1, **caractérisé en ce que** les moyens d'analyse (18) sont adaptés pour identifier un type de roulage actuel du véhicule parmi des types de roulage en ville, sur route, en montage ou sur autoroute.

**3.** Système selon la revendication 2, **caractérisé en ce que** les moyens d'analyse (18) sont adaptés pour calculer un critère de roulage instantané du véhicule, selon la relation :

$$Cr\ inst = V(1 + k\ Pp)$$

Avec

Cr inst : Critère de roulage instantané
V : Vitesse du véhicule
Pp : Position de la pédale d'accélérateur
K : Facteur de correction,

pour lisser ce critère de roulage instantané et pour le comparer à des seuils prédéterminés correspondant aux différents types de roulage afin de déterminer le type de roulage actuel.

**4.** Système selon l'une quelconque des revendications précédentes, **caractérisé en ce que** les moyens d'analyse (18) sont adaptés pour piloter le fonctionnement de moyens (14) d'alimentation commune en carburant des cylindres du moteur afin de déclencher la phase de régénération du filtre à particules par combustion des particules piégées dans celui-ci, en enclenchant une phase d'injections multiples de carburant dans les cylindres du moteur pendant leur phase de détente.

**5.** Système selon la revendication 4, **caractérisé en ce que** le moteur est associé à différents organes parmi lesquels des moyens (2) d'admission d'air dans le moteur, des moyens (3) de recyclage de gaz d'échappement du moteur en entrée de celui-ci, un turbocompresseur (5), un catalyseur d'oxydation (6) disposé en amont du filtre à particules (7) dans la ligne d'échappement, et des moyens (16) pour abaisser la température de combustion des particules piégés dans celui-ci.

**6.** Système selon l'une quelconque des revendications précédentes, **caractérisé en ce que** les moyens de calcul (18) sont adaptés pour calculer une distribution actuelle de types de roulage DA suivant la relation

$$DA = \begin{bmatrix} da_1 \\ da_2 \\ da_3 \\ .... \\ daN \end{bmatrix}$$

avec $da_x$ qui représente le nombre d'occurrences pour un type de roulage donné, et N le nombre de types de roulage différents possibles, puis pour calculer la probabilité d'avoir un type de roulage donné sur un nombre d'événements donné afin de mettre à jour une distribution historique DH selon la relation :

$$DH(n+1) = \alpha\ DH(n) + (1-\alpha)DAnorm$$

Avec

$\alpha$ : Facteur d'oubli, $\alpha \in [0,1]$
DH : Distribution historique
DAnorm : Distribution actuelle normalisée (probabilité)

et enfin pour calculer une probabilité P que le véhicule adopte un type de roulage plus favorable que le type actuel, selon la relation :

$$P = \sum_{RoulActu+1}^{N} DH_i$$

avec DH qui représente la distribution historique et RoulActu, le type de roulage actuel parmi les N types de roulage possibles.

**7.** Système selon la revendication 4 ou 5, **caractérisé en ce que** les moyens d'alimentation commune comprennent un système d'alimentation à rampe commune à haute pression d'alimentation des cylindres du moteur.

**8.** Système selon la revendication 4 ou 5, **caractérisé en ce que** les moyens d'alimentation commune comprennent des injecteurs-pompes.

**9.** Système selon la revendication 4 ou 5, **caractérisé en ce que** les moyens pour abaisser la température de combustion des particules comprennent des moyens (16) d'ajout au carburant d'un additif destiné à se déposer sur le filtre à particules.

**10.** Système selon la revendication 4 ou 5, **caractérisé**

**en ce que** le filtre à particules est un filtre catalysé.

**Patentansprüche**

1. System zur Unterstützung der Regenerierung eines in eine Auspuffstrecke eines Kraftfahrzeug-Dieselmotors eingegliederten Teilchenfilters, umfassend

   - Mittel (18) zur Erfassung von die Betriebsbedingungen des Fahrzeugs betreffenden Informationen, und
   - Mittel (18) zur Analyse dieser Informationen zur Identifizierung eines gegenwärtigen Fahrttyps des Fahrzeugs, denen Mittel (19) zum Speichern eines Verlaufs der Betriebsbedingungen des Fahrzeugs zugeordnet sind,

   **dadurch gekennzeichnet, dass** den Analysemitteln (18) auch Mittel (18) zur Berechnung von statistischen Informationen zugeordnet sind, die die Wahrscheinlichkeit betreffen, dass das Fahrzeug einen Fahrttyp annimmt, der für die Auslösung einer Regenierung des Filters günstiger als der gegenwärtige Fahrttyp ist, um diese Auslösung entsprechend zu verzögern.

2. System nach Anspruch 1, **dadurch gekennzeichnet, dass**, die Analysemittel (18) ausgelegt sind, um einen gegenwärtigen Fahrttyp des Fahrzeugs aus den Fahrttypen Fahrt in der Stadt, auf der Landstraße, im Gebirge oder auf der Autobahn zu identifizieren.

3. System nach Anspruch 2, **dadurch gekennzeichnet, dass** die Analysemittel (18) dafür ausgelegt sind, ein momentanes Fahrtkriterium des Fahrzeugs nach der folgenden Gleichung zu berechnen:

$$Cr\ inst = V(1 + k\ Pp)$$

worin:

Cr inst : momentanes Fahrtkriterium
V : Geschwindigkeit des Fahrzeugs
Pp : Stellung des Gaspedals
K : Korrekturfaktor,

um dieses momentane Fahrtkriterium zu glätten und um es mit den verschiedenen Fahrttypen entsprechenden vorbestimmten Schwellen zu vergleichen, um den gegenwärtigen Fahrttyp zu bestimmen.

4. System nach einem der vorhergehenden Ansprüche, **dadurch gekennzeichnet, dass** die Analysemittel (18) dafür ausgelegt sind, den Betrieb von Mitteln (14) zur gemeinsamen Kraftstoffversorgung der Zylinder des Motors zu steuern, um die Phase der Regenerierung des Teilchenfilters durch Verbrennung der in diesem eingefangenen Teilchen auszulösen, indem eine Phase von mehrfachen Kraftstoffeinspritzungen in die Zylinder des Motors während ihrer Entspannungsphase ausgelöst wird.

5. System nach Anspruch 4, **dadurch gekennzeichnet, dass** dem Motor verschiedene Organe zugeordnet sind, und zwar unter anderem Mittel (2) zur Luftzuleitung in den Motor, Mittel (3) zur Rezyklierung von Verbrennungsgasen des Motors zu dessen Eintritt, einen Turbolader (5), einen vor dem Teilchenfilter (7) in der Auspuffstrecke angeordneten Oxidationskatalysator (6) und Mittel (16) zum Senken der Verbrennungstemperatur der in diesem eingefangenen Teilchen.

6. System nach einem der vorhergehenden Ansprüche, **dadurch gekennzeichnet, dass** die Berechnungsmittel (18) dafür ausgelegt sind, eine gegenwärtige Verteilung von Fahrttypen DA gemäß der folgenden Beziehung zu berechnen:

$$DA = \begin{bmatrix} da_1 \\ da_2 \\ da_3 \\ ... \\ daN \end{bmatrix}$$

worin $da_x$ die Anzahl von Ereignissen bei einem gegebenen Fahrttyp und N die Anzahl von verschiedenen möglichen Fahrttypen ist, und dann um die Wahrscheinlichkeit zu berechnen, mit der man einen gegebenen Fahrttyp auf einer gegebenen Anzahl von Ereignissen hat, um eine historische Verteilung nach der Gleichung

$$DH(n + 1) = \alpha\ DH(n) + (1 - \alpha)DAnorm$$

zu aktualisieren, worin:

$\alpha$ : Vergessenheitsfaktor, $\alpha \in [0,1]$
DH : historische Verteilung
DAnorm : standardisierte gegenwärtige Verteilung (Wahrscheinlichkeit)

und schließlich um eine Wahrscheinlichkeit P zu berechnen, dass das Fahrzeug einen Fahrttyp annimmt, der günstiger als der gegenwärtige Typ ist, und zwar nach der Gleichung:

$$P = \sum_{RoulActu+1}^{N} DH,$$

worin DH die historische Verteilung und RoulActu den gegenwärtigen Fahrttyp unter N möglichen Fahrttypen darstellt.

7. System nach Anspruch 4 oder 5, **dadurch gekennzeichnet, dass** die Mittel zur gemeinsamen Versorgung ein Versorgungssystem mit einer Hochdruckdüsenleitung zur Versorgung der Zylinder des Motors umfassen.

8. System nach Anspruch 4 oder 5, **dadurch gekennzeichnet, dass** die Mittel zur gemeinsamen Versorgung Pumpendüsen umfassen.

9. System nach Anspruch 4 oder 5, **dadurch gekennzeichnet, dass** die Mittel zum Senken der Verbrennungstemperatur der Teilchen Mittel (16) zum Versetzen des Kraftstoffs mit einem Zusatz umfassen, der dazu bestimmt ist, sich auf dem Teilchenfilter abzulagern.

10. System nach Anspruch 4 oder 5, **dadurch gekennzeichnet, daß** das Teilchenfilter ein katalysiertes Filter ist.

**Claims**

1. System for aiding the regeneration of a particle filter integrated into an exhaust line of a diesel engine of a motor vehicle, comprising:

   - means (18) for acquisition of information relating to the conditions of use of the vehicle, and
   - means (18) for analysis of this information in order to identify a current type of driving of the vehicle, associated with means (19) for storing a history of the conditions of use of the vehicle,

   **characterised in that** the analysis means (18) are also associated with means for calculation of statistical information relating to the probability that the vehicle will adopt a type of driving which is more favourable to the triggering of a regeneration of the filter than the current type of driving, in order consequently to delay such triggering.

2. System as claimed in Claim 1, **characterised in that** the analysis means (18) are adapted to identify a current type of driving of the vehicle from amongst the types of driving in the town, on the open road, in mountains or on the motorway.

3. System as claimed in Claim 2, **characterised in that** the analysis means (18) are adapted to calculate an instantaneous driving criterion of the vehicle according to the relationship:

$$Cr\ inst = V(1 + k\ Pp)$$

with

   Cr inst: instantaneous driving criterion
   V: speed of the vehicle
   Pp: position of the accelerator pedal
   k: correction factor,

in order to smooth this instantaneous driving criterion and to compare it with predetermined thresholds corresponding to different types of driving in order to determine the current type of driving.

4. System as claimed in any one of the preceding claims, **characterised in that** the analysis means (18) are adapted to control the operation of common fuel supply means (14) of the engine cylinders in order to trigger the particle filter regeneration phase by combustion of the particles trapped therein by actuating multiple injections of fuel into the cylinders of the engine during their expansion phase.

5. System as claimed in Claim 4, **characterised in that** the engine is associated with different elements amongst which the means (2) for air intake into the engine, means (3) for recycling exhaust gas from the engine at the inlet thereof, a turbocompressor (5), an oxidation catalyst (6) disposed upstream of the particle filter (7) in the exhaust line, and means (16) for lowering the combustion temperature of the particles trapped therein.

6. System as claimed in any one of the preceding claims, **characterised in that** the calculation means (18) are adapted to calculate a current distribution of types of driving DA according to the following relationship:

$$DA = \begin{bmatrix} da_1 \\ da_2 \\ da_3 \\ .... \\ daN \end{bmatrix}$$

with $da_x$ which represents the number of occurrences for a given type of driving, and N the number of possible different types of driving, then in order to calculate the probability of having a given type of driving over a given number of events in order to update a historic distribution DH according to the relationship:

$$DH(n+1) = \alpha\, DH(n) + (1-\alpha)DAstand$$

with

α: omission factor, $\alpha \in [0,1]$
DH: historic distribution
DAstand: standardised current distribution (probability)

and finally in order to calculate a probability P that the vehicle will adopt a type of driving more favourable than the current type, according to the relationship:

$$P = \sum_{CurrDri+1}^{N} DH_1$$

with DH which represents the historic distribution and CurrDri, the current type of driving from amongst the N possible types of driving.

7. System as claimed in Claim 4 or 5, **characterised in that** the common supply means comprise a supply system with a common high-pressure gradient for supplying the cylinders of the engine.

8. System as claimed in Claim 4 or 5, **characterised in that** the common supply means comprise injector pumps.

9. System as claimed in Claim 4 or 5, **characterised in that** the means for lowering the combustion temperature of the particles comprise means (16) for adding to the fuel an additive intended to be deposited on the particle filter.

10. System as claimed in Claim 4 or 5, **characterised in that** the particle filter is a catalysed filter.

*FIG.1*

**_FIG.2_**

**_FIG.3_**